(19) Europäisches Patentamt
European Patent Office
Office européen des brevets

(11) **EP 1 315 399 A2**

(12) **EUROPÄISCHE PATENTANMELDUNG**

(43) Veröffentlichungstag:
28.05.2003 Patentblatt 2003/22

(51) Int Cl.⁷: **H04R 3/00**

(21) Anmeldenummer: 02026089.9

(22) Anmeldetag: 22.11.2002

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **26.11.2001 DE 10157835**

(71) Anmelder: **Tenovis GmbH & Co. KG**
**60326 Frankfurt am Main (DE)**

(72) Erfinder: **Brunsfeld, Kurt**
**65760 Eschborn (DE)**

(74) Vertreter:
**Patentanwaltskanzlei WILHELM & BECK**
**Nymphenburger Strasse 139**
**80636 München (DE)**

(54) **Gehäuseakustische Filtervorrichtung für Mikrofone in Kommunikationsgeräten**

(57) Die Erfindung betrifft eine gehäuseakustische Filtervorrichtung für ein Mikrofon (M) eines Kommunikationsgerätes. Ausgehend von einem Stand der Technik, der zur Begrenzung des Frequenzbandes der zum Mikrofon (M) übertragenen akustischen Signale ein akustisches Resonanzfilter (F) aufweist, ist eine Einrichtung (E) zur Anpassung des Frequenzganges des akustischen Resonanzfilters (F) vorgesehen.

Fig. 2

**Beschreibung**

Die vorliegende Erfindung betrifft eine Einrichtung zur Anpassung des Frequenzganges einer gehäuseakustischen Filtervorrichtung eines Kommunikationsgerätes.

Elektrische Geräte zur akustischen Kommunikation weisen Mikrofone zur Erfassung akustischer Signale auf. Häufig sind bei diesen Geräten die Bandbreite der verarbeiteten akustischen Signale der jeweiligen Anwendung angepasst. So wird z.B., um einen Kompromiss zwischen Sprachqualität und Übertragungsrate zu erreichen, die Bandbreite der in einem Telekommunikationssystem übertragenen Sprachsignale stark reduziert. Für menschliche Sprache ist dabei in der Regel eine Bandbreite von ca. 3 kHz vorgesehen. Infolge der Bandbreitenreduktion der verarbeiteten Signale verringert sich der notwendige gerätetechnische Aufwand.

Die Anpassung der Bandbreite der zu einem Mikrofon eines Telekommunikationsgerätes übertragenen akustischen Signale kann mit Hilfe einer gehäuseakustischen Filtervorrichtung stattfinden. Dabei wird in der Regel ein durch glatte Begrenzungswände gebildetes Resonanzvolumen im Gehäuse des jeweiligen Gerätes zwischen den Schaleintrittsöffnungen und dem Mikrofon realisiert, der als akustisches Resonanzfilter wirkt. Eine solche Filtervorrichtung weist einen Frequenzbereich um die Resonanzfrequenz auf, der das Resonanzfilter besonders gut passiert. Andere Frequenzen dagegen werden mehr oder weniger stark gedämpft. Ein Resonanzfilter wirkt damit wie ein guter Tiefpass, mit dessen Hilfe insbesondere die Frequenzen oberhalb des Übertragungsbandes effektiv gedämpft werden können. Als nachteilig erweist sich allerdings die hohe Güte herkömmlicher akustischer Resonanzfilter, da hierdurch ein Frequenzbereich des Übertragungsbandes stark überhöht wird.

Aufgabe der vorliegenden Erfindung ist es, ein Kommunikationsgerät bereitzustellen, das eine Vorrichtung zur Erfassung akustischer Signale mit einem verbesserten Frequenzgang aufweist.

Diese Aufgabe wird durch ein Kommunikationsgerät nach Anspruch 1 gelöst. Weitere vorteilhafte Ausführungsformen der Erfindung sind in den abhängigen Ansprüchen angegeben.

Durch die Anordnung der erfindungsgemäßen Einrichtung innerhalb eines akustischen Resonanzfilters können die akustischen Eigenschaften des Resonanzfilters beeinflusst werden. Die in das Resonanzvolumen hineinragenden Einrichtung bilden Absorberkanäle und -volumina, die eine hohe akustische Dämpfung aufweisen. Hierdurch kann Resonanzüberhöhung des akustischen Resonanzfilters wirkungsvoll unterdrückt werden.

In einer vorteilhaften Ausführungsform der Erfindung sind die Elemente der Dämpfungseinrichtung einstückig mit einer das Resonanzvolumen begrenzenden Wand ausgebildet. Hierdurch kann die Dämpfungseinrichtung besonders einfach realisiert werden.

In einer weiteren bevorzugten Ausführungsform der Erfindung weist die Dämpfungseinrichtung mehrere symmetrisch angeordnete Elemente auf. Hierdurch können eine Vielzahl ähnlicher Absorberkanäle und -volumina gebildet werden, die eine hohe frequenzabhängige Dämpfung im gewünschten Frequenzbereich herstellen.

Als eine weitere vorteilhafte Ausführungsform der Erfindung ist die Dämpfungseinrichtung auf der dem Mikrofon entgegenliegenden Seite des Resonanzvolumens angeordnet. Hierdurch wird eine effektive Dämpfung des gewünschten Frequenzbereichs bei gleichzeitiger geringen Abschwächung des gesamten akustischen Signals erreicht.

Die Erfindung wird im Folgenden anhand der Figuren näher erläutert. Es zeigen:

Fig. 1 eine herkömmliche Vorrichtung zur Erfassung akustischer Signale;

Fig. 2 eine erste Ausführungsform einer erfindungsgemäßen Vorrichtung mit einer Dämpfungseinrichtung;

Fig. 3 eine zweite Ausführungsform einer erfindungsgemäßen Vorrichtung mit einer Dämpfungseinrichtung;

Fig. 4 eine Draufsicht der erfindungsgemäßen Ausführungsform nach Figur 2;

Fig. 5 eine Vergleich des Frequenzgangs der herkömmlichen Filtervorrichtung nach Figur 1 im Vergleich zum Frequenzgang der erfindungsgemäßen Filtervorrichtung nach Figur 2; und

Fig. 6 eine Explosionsdarstellung eines Telefonhörers.

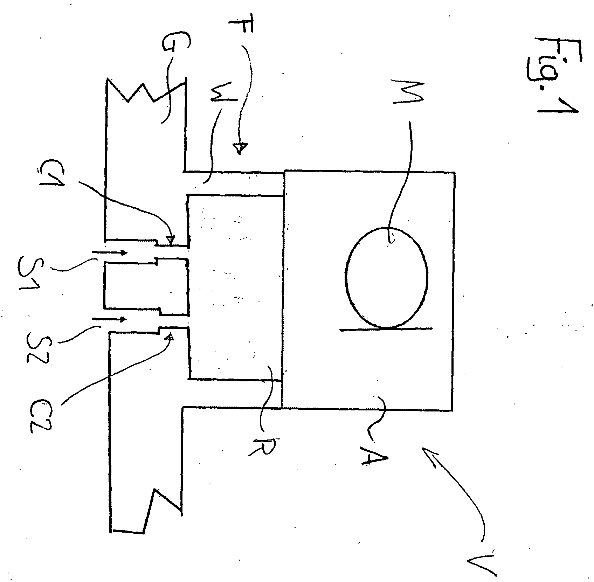

Figur 1 zeigt eine herkömmliche Vorrichtung V zur Erfassung akustischer Signale mit einem Mikrofon M und einem dem Mikrofon M vorgeordneten akustischen Resonanzfilter F, die in einem Gehäuse G eines Telekommunikationsgerätes angeordnet ist. Das Mikrofon M ist dabei in einer Aufnahme A untergebracht, die zur mechanischen Entkopplung des Mikrofons M von dem Gehäuse G des Telekommunikationsgerätes dient und aus einem schalldämpfenden Werkstoff besteht. Die Aufnahme A schließt dabei mit den Begrenzungswänden W eines vorzugsweise rund ausgebildeten akustischen Resonanzfilters F der Vorrichtung V formschlüssig ab. Das akustische Resonanzfilter F besteht insbesondere aus einem Resonanzvolumen R, das durch die Begrenzungswände W, die Aufnahme A und die Geräteaußenwand G begrenzt wird. In der durch die Geräteaußenwand G gebildeten Begrenzungsfläche des akustischen Resonanzfilters F sind zwei Öffnungen S1, S2 vorgesehen, durch die Schallwellen von außen in die Vorrichtung V gelangen. Beide Schalleintrittsöffnungen S1, S2 weisen dabei Verjüngungen C1, C2 auf, durch die jeweils ein Schalleintrittkanal gebildet wird.

Die durch die Schalleintrittskanäle C1, C2 in das Resonanzvolumen R eintretenden Schallwellen werden auf ihrem Weg zum Mikrofon M durch das akustische Resonanzfilter F stark beeinflusst. Insbesondere die räumliche Ausgestaltung aber auch die verwendeten Materialien des akustischen Resonanzfilters F bestimmen dabei seine akustischen Eigenschaften (Frequenzgang, Resonanzfrequenz $f_R$, etc.). Die Resonanzfrequenz $f_R$ des akustischen Resonanzfilters F kann in einer groben Näherung durch die Gleichung zu Bestimmung der Resonanzfrequenz $f_r$ eines idealen Helmholtzresonators beschrieben werden:

$$f_r = \frac{c}{2\pi}\sqrt{\frac{(L \cdot t)}{V}}$$

mit L: Größe der Eintrittsöffnung, t: Tiefe des Eintrittskanals und V: Volumen des Resonanzraums.

Das in Figur 1 dargestellte akustische Resonanzfilter F verstärkt insbesondere Frequenzen, die im Frequenzspektrum nahe an der Resonanzfrequenz $f_R$ des akustischen Resonanzfilters F liegen, und dämpft Frequenzen, die im Frequenzspektrum weiter entfernt von der Resonanzfrequenz $f_R$ des akustischen Resonanzfilters F liegen. Da diese Resonanz für größere Frequenzen in der Regel steil abfällt, wird das Resonanzfilter F als Tiefpass in Kommunikationsgeräten eingesetzt. Der Frequenzbereich unmittelbar um die Resonanzfrequenz $f_R$ des herkömmlich gestalteten Resonanzfilters F weist jedoch eine derart starke Resonanzüberhöhung auf, dass es zu unerwünschten Effekten kommt.

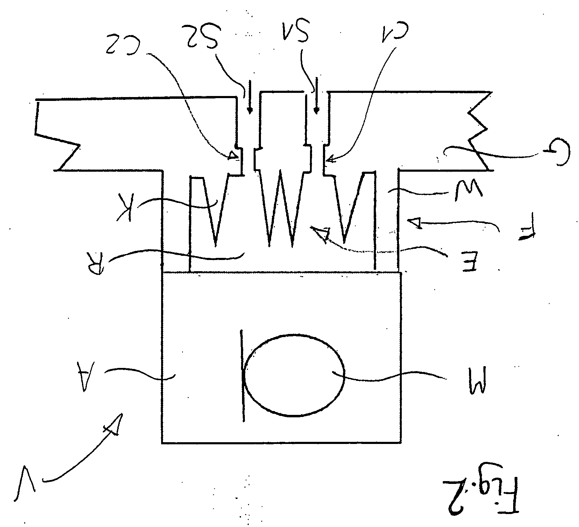

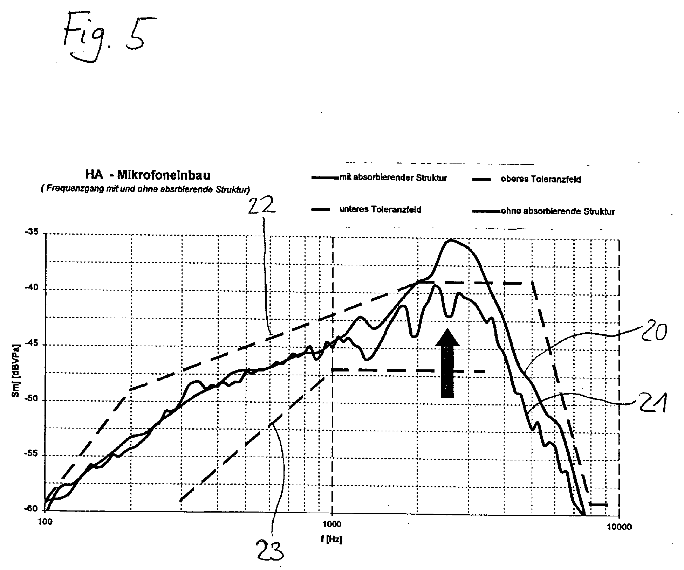

Figur 2 zeigt ein erstes Beispiel einer gehäuseakustischen Filtervorrichtung V eines Kommunikationsgerätes gemäß der Erfindung. Die gehäuseakustische Filtervorrichtung V ist dabei analog zu der Filtervorrichtung aus Figur 1 aufgebaut, weist jedoch zusätzlich eine erfindungsgemäße Einrichtung E zur Beeinflussung des Frequenzganges auf. Die Einrichtung E besteht aus mehreren vorzugsweise symmetrisch auf der durch das Gehäuse G des Kommunikationsgerätes gebildeten Begrenzungswand des Resonanzvolumens R angeordneten Elementen K. Jedes der Elemente K ist dabei einstückig mit der Gehäusewand G als eine mit der Spitze in das Resonanzvolumen V hineinragende Pyramide ausgebildet. Hierdurch werden zwischen den Elementen K untereinander sowie zwischen den Elementen K und den Begrenzungswänden W, G, A des Resonanzvolumens R Absorberkanäle und -volumina mit hoher akustischer Dämpfung erzeugt. Darüber hinaus weist die Einrichtung E eine hohe Frequenzabhängigkeit auf, wodurch sich gezielt die Beeinflussung bestimmter Frequenzbereiche erreichen lässt. Wie in Figur 5 gezeigt, werden die akustischen Eigenschaften des Resonanzfilters F durch die Einrichtung E der Figur 2 stark beeinflusst, wobei es aufgrund der guten Frequenzselektivität der Einrichtung E insbesondere zu einer wirkungsvollen Dämpfung der Resonanzüberhöhung kommt. Durch die Form, die Größe und die geometrische Anordnung der Elemente E kann eine Abstimmung der akustischen Absorber- bzw. Dämpfungswirkung erreicht werden.

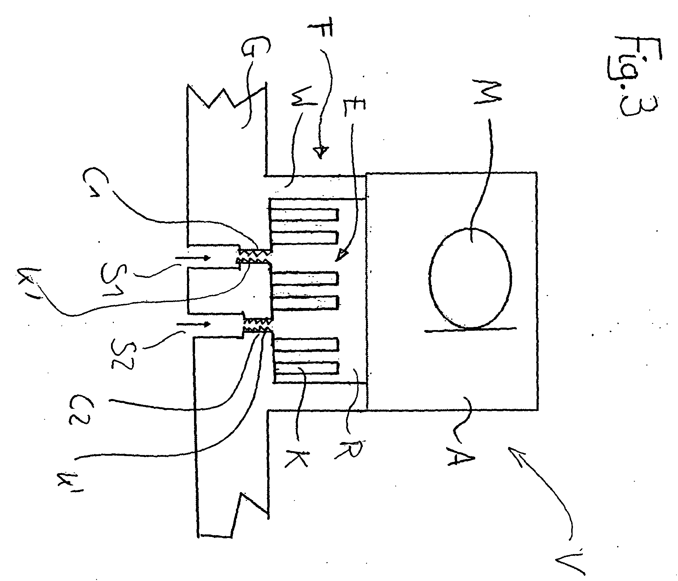

Figur 3 zeigt ein zweites Beispiel einer gehäuseakustischen Filtervorrichtung V eines Kommunikationsgerätes gemäß der Erfindung. Die Elemente K der Einrichtung E sind dabei zylinderförmig ausgebildet. Die Einrichtung E ist analog zur Figur 2 auf der dem Mikrofon gegenüber liegenden Gehäuseaußenwand G angeordnet, wobei die Elemente K im Unterschied zur Figur 2 nicht einstückig mit der Gehäuseaußenwand G ausgebildet sind. Dabei können die Elemente K z.B. einzeln mit der Gehäusewand G verbunden oder Teil eines Formelementes (nicht gezeigt) sein, das formschlüssig im Resonanzvolumen R angeordnet ist.

Alternativ besteht die Möglichkeit neben den in Figur 2 und Figur 3 gezeigten Elementformen anders gearteten Strukturen, wie z.B. Längsrillen auf den Begrenzungswänden W, A, G einzusetzen, um eine effektive Dämpfung der Resonanzüberhöhung zu erreichen. Weiterhin können die Elemente K der Dämpfungseinrichtung E auch zusätzlich oder ausschließlich im Bereich der Schalleintrittskanäle C1, C2 angeordnet sein. Solche zusätzlichen Elemente K' sind als kleine Pyramiden in Figur 3 in den Schalleintrittskanälen C1, C2 dargestellt.

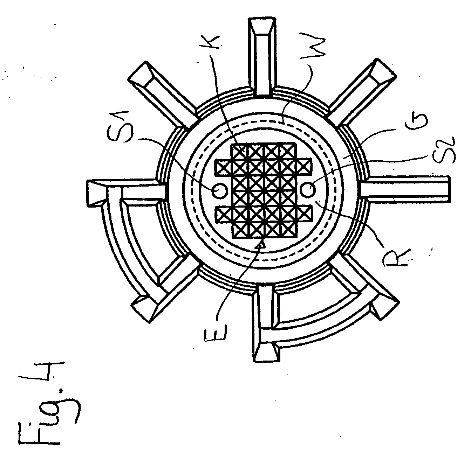

Figur 4 zeigt eine Draufsicht auf die gehäuseakustische Filtervorrichtung V mit der Einrichtung E aus Figur 1. Die Einrichtung E besteht in diesem Fall aus 28 pyramidenförmigen Elementen K, die mit ihren jeweils quadratischen Grundflächen aneinander angrenzen. Die Elemente K sind dabei symmetrisch beidseits der durch die beiden Schalleintrittsöffnungen S1, S2 gebildeten Achse auf der durch die Gehäuseaußenwand G gebildeten Grundfläche des zylinderförmigen Resonanzvolumens R angeordnet.

Figur 5 verdeutlicht die durch die erfindungsgemäße Einrichtung E erzeugte Dämpfung der Resonanzüberhöhung eines akustischen Resonanzfilters F. Hierzu sind die beiden Frequenzgänge 20, 21 der akustischen Resonanzfilter F aus Figur 1 und aus Figur 2 zum Vergleich in einem Diagramm eingezeichnet. Dabei ist das frequenzabhängige Ausgangssignal in Bezug auf das Eingangssignal logarithmisch aufgetragen. Die gestrichelten Linien 22, 23 stellen die untere und die obere gerätespezifische Toleranzgrenze für die zum Mikrofon M übertragenen akustischen Signale dar. Aufgrund der Resonanzüberhöhung um die Resonanzfrequenz $f_R$ (bei ca. 2,5 kHz) weist die erste Kurve 20, die den Frequenzgang des akustischen Resonanzfilters F aus Figur 1 darstellt, eine hohe Güte auf. Dabei übersteigt die Kurve 20 im Bereich der Resonanzfrequenz

$f_R$ deutlich die obere Toleranzgrenze 22. Hieraus können negative Effekte, wie z.B. zu Rückkopplungen und Echo, resultieren.

Die zweite Kurve 21 der Figur 5 zeigt den Frequenzgang des akustischen Resonanzfilters F mit der Einrichtung E aus Figur 2. Durch die innerhalb des Resonanzvolumens R angeordnete Einrichtung E kommt es zur deutlichen Dämpfung der Resonanzüberhöhung. Diese Dämpfung weist eine hohe Frequenzselektivität auf, wodurch lediglich der überhöhte Frequenzbereich effektiv gedämpft wird.

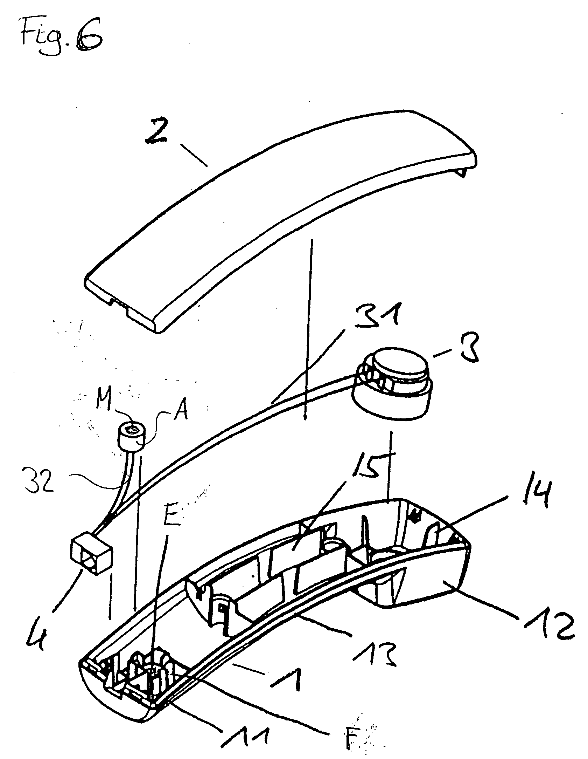

Figur 6 zeigt eine in einem Telefonhörer eines Telekommunikationsgerätes integrierte Vorrichtung V zur Erfassung akustischer Signale mit einer erfindungsgemäßen Einrichtung E zur Beeinflussung des Frequenzgangs. Es ist im Sinne der Erfindung diese Vorrichtung V ebenso in Freisprecheinrichtungen von Telefonapparaten oder in sog. Headsets sowie in weiteren zur Erfassung akustischer Signale ausgebildeten Geräten, wie z.B. Handys, Diktiergeräte etc. vorzusehen.

Der in Figur 6 dargestellte Telefonhörer besteht im wesentlichen aus einer Unterschale 1 und einer Oberschale 2, die vorzugsweise jeweils aus Kunststoff gefertigt sind, wobei an dem einen Ende der Unterschale 1 eine Sprechkappe 11 und an dem anderen Ende der Unterschale 1 eine Hörkappe 12 ausgebildet sind, die durch ein Handgriffteil 13 miteinander verbunden werden. Bei der Unterschale 11 ist im Bereich der Hörkappe 12 eine Fassung 14 zur Positionierung eines Lautsprechers 3 in der Hörkappe vorgesehen. Die Hörkappe 12 weist weiterhin vorzugsweise eine leicht gewölbte Hörermuschel (nicht gezeigt) auf der Außenfläche auf, die am Ohr des Benutzers anliegt und mit einem akustischen Gitter versehen ist, um die vom Lautsprecher erzeugten Schallwellen an den Gehörgang des Benutzers weiterzuleiten.

Im Handgriffteil 13 der Unterschale 1 ist weiterhin ein langgestrecktes Formteil 15 vorgesehen, in dem ein Lautsprecherkabel 31 geführt wird, das den Lautsprecher 3 mit einem Ansteckteil 4 verbinden, das am unteren Ende der Sprechkappe in der Unterschale 1 angeordnet ist. In diesem Ansteckteil 4 kann eine Hörerschnur (nicht gezeigt) eingesteckt, die den Hörer dann mit der Feststation des Telefons verbindet. Es besteht jedoch auch die Möglichkeit, einen schnurlosen Anschluss des Hörers an die Feststation über eine Funkübertragung vorzusehen. Das Ansteckteil 4 ist weiterhin über ein Übertragungskabel 32 mit einem in einer Aufnahme A untergebrachten Mikrofon M verbunden, das in der Sprechkappe 11 des Hörers angeordnet ist. In der Sprechkappe 11 der Unterschale 1 ist weiterhin ein akustischer Resonanzfilter F ausgebildet, in dem die erfindungsgemäße Einrichtung E angeordnet ist. Aufgrund der frequenzselektiven Dämpfung der Einrichtung E werden Rückkopplungen zwischen Mikrofon M und Lautsprecher 3 wirkungsvoll unterdrückt und somit eine Verbesserung der Umlaufdämpfung erzielt.

**Patentansprüche**

1. Kommunikationsgerät mit einer Vorrichtung (V) zur Erfassung akustischer Signale, die ein Mikrofon (M) und ein dem Mikrofon (M) vorgeordnetes Resonanzvolumen (R) aufweist, wobei das Resonanzvolumen (R) Teil eines akustischen Resonanzfilters (F) ist, der die Frequenzen der zum Mikrofon (M) übertragenen akustischen Signale festlegt, **dadurch gekennzeichnet,** **dass** das Resonanzvolumen (R) eine Einrichtung (E) zur Beeinflussung des Frequenzgangs des akustischen Resonanzfilters (F) aufweist.

2. Kommunikationsgerät nach Anspruch 1, **dadurch gekennzeichnet,** **dass** die Einrichtung (E) zur Beeinflussung des Frequenzgangs des akustischen Resonanzfilters (F) wenigstens ein in das Resonanzvolumen (R) hineinragendes Element (K) aufweist.

3. Kommunikationsgerät nach Anspruch 1 oder 2, **dadurch gekennzeichnet,** **dass** die Einrichtung (E) auf einer Begrenzungswand (W,A,G) des Resonanzvolumens (R) angeordnet ist.

4. Kommunikationsgerät nach Anspruch 3, **dadurch gekennzeichnet,** **dass** das Element (K) zur Beeinflussung des Frequenzgangs akustischen Resonanzfilters (F) mit einer Begrenzungswand (W, A, G) des Resonanzvolumens (R) einstückig ausgebildet ist.

5. Kommunikationsgerät nach Anspruch 3 oder 4, **dadurch gekennzeichnet,** **dass** das Element (K) zur Beeinflussung des Frequenzgangs akustischen Resonanzfilters (F) pyramiden-, kegel-, würfel-, quader- oder zylinderförmig ausgebildet ist.

6. Kommunikationsgerät nach einem der Ansprüche 1 bis 5, **dadurch gekennzeichnet,** **dass** das Element (K) zur Beeinflussung des Frequenzgangs des akustischen Resonanzfilters (F) auf der dem Mikrofon (M) entgegengesetzten Seite des Resonanzvolumens (R) angeordnet ist.

7. Kommunikationsgerät nach einem der Ansprüche 1 bis 6, **dadurch gekennzeichnet,** **dass** die Einrichtung (E) zumindest teilweise innerhalb eines Schalleintrittkanals (C1, C2) des Resonanzvolumens (R) angeordnet ist.

8. Kommunikationsgerät nach einem der Ansprüche 1 bis 7,

**dadurch gekennzeichnet,**
**dass** die Einrichtung (E) zur Beeinflussung des Frequenzgangs des akustischen Resonanzfilters (F) aus mehreren symmetrisch im Resonanzvolumen (R) angeordneten Elementen besteht.

9. Kommunikationsgerät nach einem der Ansprüche 1 bis 8,
**dadurch gekennzeichnet,**
**dass** die Einrichtung (E) zur Beeinflussung des Frequenzgangs des akustischen Resonanzfilters (F) ausgelegt ist, eine Dämpfung der Resonanzüberhöhung des akustischen Resonanzfilters (F) zu wirken.

Fig.1

Fig.2

Fig.3

Fig. 4

Fig. 5

HA - Mikrofoneinbau
( Frequenzgang mit und ohne absrbierende Struktur)

mit absorbierender Struktur    oberes Toleranzfeld
unteres Toleranzfeld    ohne absorbierende Struktur

Fig.6